(19) Europäisches Patentamt
European Patent Office
Office européen des brevets

(11) **EP 2 972 138 B1**

(12) **EUROPEAN PATENT SPECIFICATION**

(45) Date of publication and mention
of the grant of the patent:
**23.11.2022 Bulletin 2022/47**

(21) Application number: **14709108.6**

(22) Date of filing: **22.02.2014**

(51) International Patent Classification (IPC):
**G01F 1/684** *(2006.01)*      **G01F 25/10** *(2022.01)*
**G01F 15/00** *(2006.01)*      **G01F 5/00** *(2006.01)*

(52) Cooperative Patent Classification (CPC):
**G01F 1/6847; G01F 5/00; G01F 15/005;
G01F 25/10**

(86) International application number:
**PCT/US2014/017859**

(87) International publication number:
**WO 2014/158530 (02.10.2014 Gazette 2014/40)**

(54) **SYSTEM AND METHOD TO AUTOMATICALLY SELF-ADJUST A VALVE PEDESTAL OF A MASS FLOW CONTROLLER**

SYSTEM UND VERFAHREN ZUR AUTOMATISCHEN SELBSTEINSTELLUNG EINES VENTILSOCKELS EINER MASSENDURCHFLUSSSTEUERUNG

SYSTÈME ET PROCÉDÉ PERMETTANT D'AUTOAJUSTER AUTOMATIQUEMENT UN SOCLE DE SOUPAPE D'UN ORGANE DE COMMANDE DE DÉBIT MASSIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.03.2013 US 201361783346 P**

(43) Date of publication of application:
**20.01.2016 Bulletin 2016/03**

(73) Proprietor: **Illinois Tool Works Inc.
Glenview, IL 60025 (US)**

(72) Inventors:
• **VALENTINE, William S.
Glenview, Illinois 60025 (US)**
• **ELLEC, Christophe
Glenview, Illinois 60025 (US)**

(74) Representative: **Trinks, Ole
Meissner Bolte Patentanwälte
Rechtsanwälte Partnerschaft mbB
Postfach 10 26 05
86016 Augsburg (DE)**

(56) References cited:
**WO-A1-2013/022697      WO-A2-2004/010234
US-A- 4 877 051      US-A- 5 062 446**

**Description**

**BACKGROUND OF THE INVENTION**

1. Field of the Invention

The present invention relates generally to the operation of a mass flow controller (MFC).

2. Discussion of the Related Art

Many industrial processes require precise control of various process fluids. For example, in the semiconductor industries, mass flow controllers are used to precisely measure and control the amount of a process fluid that is introduced to a process chamber. The term fluid is used herein to describe any type of matter in any state that is capable of flow. For example, it is to be understood that the term fluid may apply to liquids, gases, vapors, and slurries comprising any combination of matter or substance to which controlled flow may be of interes An example of a mass flow controller and a method for compensating for pressure transients in the pressure environment of a flow path of the controller is presented in patent document WO 2004/010234 A2. This document describes for instance adjusting the drive signal that the controller sends to the valve to compensate for movement of the plunger due to pressure transients.

MFC customers often monitor the turn-on characteristics as a quality and performance metric (e.g.. the time it takes to reach the setpoint and the amount of overshoot). Typically no overshoot is allowed.

Customers want repeatability from device to device. To ensure that an MFC behaves correctly, the MFC is tuned. Tuning is the process by which a specific MFC characteristic is calibrated so that each device may provide the same behavior when subjected to the same inputs. For example, when given a particular setpoint, all MFCs are expected to reach that setpoint within a certain amount of time (e.g., 300 ms +/- 50 ms). It would not be of interest for the customer to get MFCs that are as fast as possible if one of them reaches setpoint in 150 ms and another in 400 ms.

Tuning an MFC is a difficult operation that requires specialized setup and experienced operators. In addition, changes in the operating conditions and slight changes in the physical characteristics of the MFC can require expensive field service to retune the device after a few months of operation.

Accordingly, the disclosed inventions seek to provide one or more solutions to the above problems. For instance, in one embodiment, the disclosed inventions include an MFC that is configured to execute an algorithm for monitoring the turn-on response characteristics and automatically self-adjust the tuning parameters.

**BRIEF DESCRIPTION OF THE DRAWINGS**

Illustrative embodiments of the present invention are described in detail below with reference to the attached figures, which are incorporated by reference herein and wherein:

Figure 1 is a diagram that illustrates components of a mass flow controller in accordance with the disclosed embodiments;

Figure 2 is a graph illustrating an example an initial tuning and stress cycle in accordance with the disclosed embodiments;

Figure 3A is a flow chart depicting an example of process for automatically self-adjusting the tuning parameters

Figure 3B is a flow chart depicting an embodiment of a process for automatically self-adjusting the tuning parameters in accordance with the disclosed embodiments; and

Figure 4 is a block diagram that depicts a modified control algorithm that is executed in a mass flow controller in accordance with the disclosed embodiments.

**DETAILED DESCRIPTION**

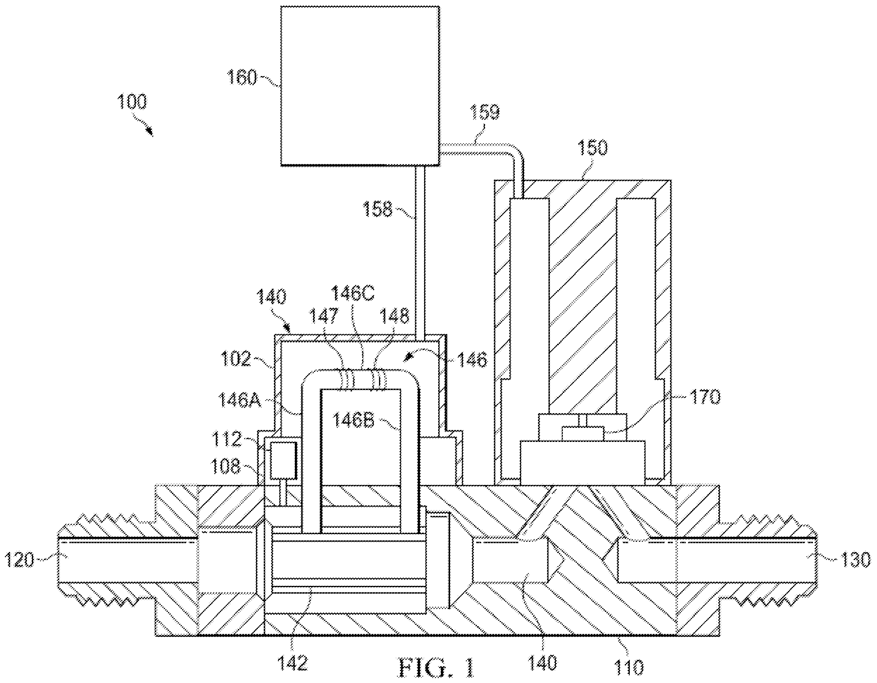

The disclosed embodiments and advantages thereof are best understood by referring to Figures 1-4 of the drawings, like numerals being used for like and corresponding parts of the various drawings. Other features and advantages of the disclosed embodiments will be or will become apparent to one of ordinary skill in the art upon examination of the following figures and detailed description. It is intended that all such additional features and advantages be included within the scope of the disclosed embodiments. Further, the illustrated figures are only exemplary and are not intended to assert or imply any limitation with regard to the environment, architecture, design, or process in which different embodiments may be implemented.

Figure 1 illustrates components of a mass flow controller 100 in accordance with the disclosed embodiments. In one embodiment, mass flow controller 100 includes a block 110, which is the platform on which the components of the mass flow controller are mounted. A thermal mass flow meter 140 and a valve assembly 150 are mounted on the block 110 between a fluid inlet 120 and a fluid outlet 130. In other embodiments, the thermal mass flow meter 140 may be bolted directly to the valve assembly 150 without the use of the block 110. The valve assembly 150 includes a control valve 170. In certain embodiments, the control valve 170 may be one of a solenoid valve or a Piezo valve. The thermal mass flow meter 140 includes a bypass 142 through which typically a majority of fluid flows and a thermal flow sensor 146 through which a smaller portion of the fluid flows.

Thermal flow sensor 146 is contained within a sensor housing 102 (portion shown removed to show sensor 146) mounted on a mounting plate or base 108. Sensor 146 is a small diameter tube, typically referred to as a capillary tube, with a sensor inlet portion 146A, a sensor outlet portion 146B, and a sensor measuring portion 146C about which two resistive coils or windings 147, 148 are disposed. In operation, electrical current is provided to the two resistive windings 147, 148, which are in thermal contact with the sensor measuring portion 146C. The current in the resistive windings 147, 148 heats the fluid flowing in measuring portion 146 to a temperature above that of the fluid flowing through the bypass 142. The resistance of windings 147, 148 varies with temperature. As fluid flows through the sensor conduit, heat is carried from the upstream resistor 147 toward the downstream resistor 148, with the temperature difference being proportional to the mass flow rate through the sensor.

An electrical signal related to the fluid flow through the sensor is derived from the two resistive windings 147,148. The electrical signal may be derived in a number of different ways, such as from the difference in the resistance of the resistive windings or from a difference in the amount of energy provided to each resistive winding to maintain each winding at a particular temperature. Examples of various ways in which an electrical signal correlating to the flow rate of a fluid in a thermal mass flow meter may be determined are described, for example, in commonly owned U.S. Pat. No. 6,845,659, which is hereby incorporated by reference. The electrical signals derived from the resistive windings 147,148 after signal processing comprise a sensor output signal.

The sensor output signal is correlated to mass flow in the mass flow meter so that the fluid flow can be determined when the electrical signal is measured. The sensor output signal is typically first correlated to the flow in sensor 146, which is then correlated to the mass flow in the bypass 142, so that the total flow through the flow meter can be determined and the control valve 170 can be controlled accordingly. The correlation between the sensor output signal and the fluid flow is complex and depends on a number of operating conditions including fluid species, flow rate, inlet and/or outlet pressure, temperature, etc.

A bypass 142 may then be mounted to the sensor, and the bypass 142 is tuned with the known fluid to determine an appropriate relationship between fluid flowing in the mass flow sensor and the fluid flowing in the bypass at various known flow rates, so that the total flow through the flow meter can be determined from the sensor output signal. In some mass flow controllers, no bypass is used, and the entire flow passes through the sensor. The mass flow sensor portion and bypass 142 may then be mated to the control valve and control electronics portions and then toned again, under known conditions. The responses of the control electronics and the control valve are then characterized so that the overall response of the system to a change in set point or input pressure is known, and the response can be used to control the system to provide the desired response.

In addition, the mass flow controller 100 may include a pressure transducer 112 coupled to flow path at some point, typically, but not limited to, upstream of the bypass 142 to measure pressure in the flow path. Pressure transducer 112 provides a pressure signal indicative of the pressure.

Control electronics 160 is used to control the position of the control valve 170 in accordance with a set point indicating the desired mass flow rate, and an electrical flow signal from the mass flow sensor indicative of the actual mass flow rate of the fluid flowing in the sensor conduit. In certain embodiments, traditional feedback control methods such as proportional control, integral control, proportional-integral (PI) control, derivative control, proportional-derivative (PD) control, integral-derivative (ID) control, and proportional-integral-derivative (PID) control are then used to control the flow of fluid in the mass flow controller. Other embodiments may employ a model based controller that does not use any PID type control. A control signal (e.g., a control valve drive signal) is generated based upon an error signal that is the difference between a set point signal indicative of the desired mass flow rate of the fluid and a feedback signal that is related to the actual mass flow rate sensed by the mass flow sensor. The control valve is positioned in the main fluid flow path (typically downstream of the bypass and mass flow sensor) and can be controlled (e.g., opened or closed) to vary the mass flow rate of fluid flowing through the main fluid flow path, the control being provided by the mass flow controller.

In the illustrated example, the flow rate is supplied by electrical conductors 158 to a closed loop system controller 160 as a voltage signal. The signal is amplified, processed and supplied using electrical conductors 159 to the valve assembly 150 to modify the flow. To this end, the controller 160 compares the signal from the mass flow sensor 140 to predetermined values and adjusts the control valve 170 accordingly to achieve the desired flow.

Although Figure 1 depicts that the mass flow controller 100 includes a thermal mass flow sensor, the mass flow controller 100, in accordance with the disclosed embodiments, may utilize other types of mass flow sensors including a Coriolis type sensor or a differential pressure type sensor. An advantage of using a Coriolis-based sensor is that it is capable of determining mass flow independent of temperature, flow profile, density, viscosity, and homogeneity. Additionally, differential pressure type sensors are becoming popular for gas control.

Additionally, while the above description of the mass flow controller 100 discloses the use of voltage signals, in certain embodiments, the mass flow controller 100 may include distributed electronics where the signals will be digital commands to and from the sensor and to and from the valve.

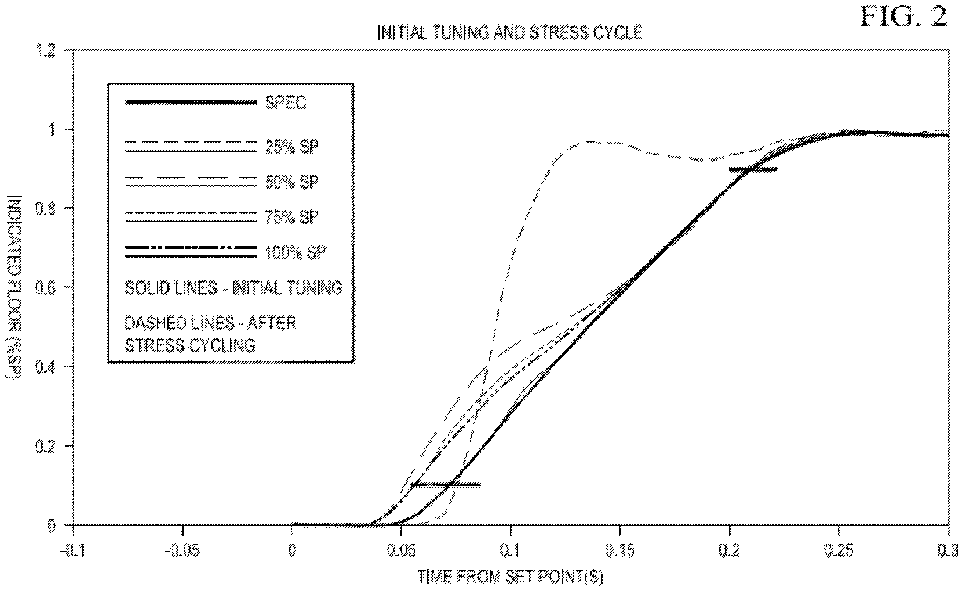

Figure 2 depicts an example of a graph illustrating an initial tuning and stress cycle. As illustrated in Figure 2, a device is tuned so its response from the factory (solid lines) passes within the horizontal black lines that represent the allowable limits. Over time, the response of the device changes so that the new response (dashed lines) does not fall within the limits anymore. Currently, this is monitored by the customer who then will either return the units to the factory or request a field service technician to come and fix the MFC. Either action is time consuming, costly and results in customer dissatisfaction.

In addition, the response characteristics is gas specific, but the tuning is typically done only on one gas at the factory then again at the customer site if a different gas requites drastic changes in tuning. One current work around for the change over time is to subject the valve to extensive cycling at the factory after tuning, then validate, then retune as necessary and cycle again. However, this is time consuming and is a non value added process.

Accordingly, as stated above, the disclosed inventions provide an MFC that executes an algorithm to monitor the turn-on response characteristics and automatically self-adjust the tuning parameters.

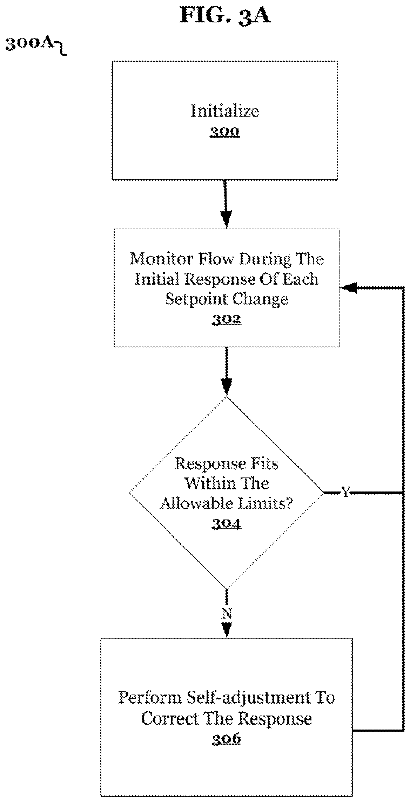

Figure 3A depicts a process 300A according to the invention for automatically self-adjusting the tuning parameters such as a valve pedestal value, for correcting a valve response of a MFC due to changes that occur over time and/or alternatively, due to a change in inlet pressure. The valve pedestal value is the amount of displacement the valve first moves after receiving a non-xetro setpoint. It is like a first step move to avoid a long delay in the valve opening. The valve pedestal value is typically set at tuning to the highest possible value that can provide a quick response without overshoot. Setting the value too high will cause the valve to "jump the gun" and create an overshoot as the valve moves too far too fast. In addition, the pedestal parameter is highly sensitive to the inlet pressure and gas characteristics. Additionally, over time, the tuning parameters may require adjustment due to changes in the operating conditions and slight changes in the physical characteristics of the control valve.

In accordance with one embodiment, a MFC as described above is initially tuned so its response from the factory is within allowable limits in accordance with the below equation:

$$\text{Pedestal} = P_{\text{factory}} \quad (\text{Equation 1})$$

Where $P_{\text{factory}}$ is a constant determined at the factory.

The process 300A, at step 300, begins by initializing the MFC during power up or during a change of gas to reload pertinent attributes from memory. The process 300A then monitors the flow during the initial response of each setpoint change from zero to non zero (block 302) and measuring/determining whether the response fits within the allowable limits (block 304). For example, in one embodiment, one measured value is the time to reach X % of the final setpoint (X typically 10%-20%, t20) and another measured value is the time to reach Y% of the final setpoint (Y typically 75%- 95%, $t_{95}$). In certain embodiments, the disclosed embodiments could monitor the whole curve for fit against a nominal curve as opposed to only looking at t20 and t95.

According to the invention a third measured value is the value of the overshoot the first time the flow passes the requested setpoint (ovs). That value can be 100% to 125% of the final setpoint, but could be over 200% when the tuning is really poor.

If the response fits within the allowable limits, the process returns to step 302. However, if the response does not fit within the allowable limits, the process automatically performs a self-adjustment to correct for the response (block 306). For example, in one embodiment, the process may be configured to execute instructions to correct the response by adjusting the P,I and D parameters of the control loop,

The process is configured to execute instructions to correct the response by adjusting the pedestal parameters such as adjusting the pedestal correction value. For instance, as shown in Figure 2, the response characteristics may slowly evolve over time to the point where the response curves do not fall within the acceptable limit. In one embodiment, the algorithm will correct this degradation by adjusting the pedestal as a function of inlet pressure, for example, based on the following equations:

$$\text{Ped}_{\text{corrected}} = \text{Pedestal} * (1 + P_{\text{correctionfactor}}) \quad (\text{Equation 2})$$

$$\text{Pedestal} = Pr_{actual} * (Ped_{high} - Ped_{low})/(Pr_{high} - Pr_{low}) + Pr0 \quad \text{(Equation 3)}$$

Or

$$\text{Pedestal} = Pr0 + Pr1 * Practual + Pr2 * Practual^2 + \ldots + Prn * Practual^n \quad \text{(Equation 4)}$$

where Pr0 ... Pm are constants determined during tuning process;

$Pr_{actual}$ is the pressure measured by pressure transducer 112;

$Ped_{high}$ $Ped_{low}$ are the respective pedestal values obtained at high and low pressure during the factory tuning process; and

$P_{correctionfactor}$ is adjusted iteratively after each setpoint change. If the response is outside on the too fast side, the correction factor is decremented by a small amount. If the response is outside on the too slow side, the correction factor is incremented by a small amount. The correction factor can be positive or negative. The amount of correction may be adjustable. Since the goal is to adjust at every step, the amount of correction is typically very small but additive over time, so as not to introduce any sudden changes to the process. The total amount of correction allowable may be adjustable. Alarms may be implemented based on some correction threshold.

Similar corrections may be implemented for the P, J D parameters in block 306, with respective amount of correction, limits and thresholds.

All the correction factors may be saved in flash memory after a certain amount of time or a certain level of correction so that after a power cycle the device continues the correction from the last saved value instead of starting from 0. Additionally, all the correction factors may be saved as gas dependent values so that if the customer changes gas periodically to accommodate their processes requirements, the correction for each gas is separate from the corrections for another gas.

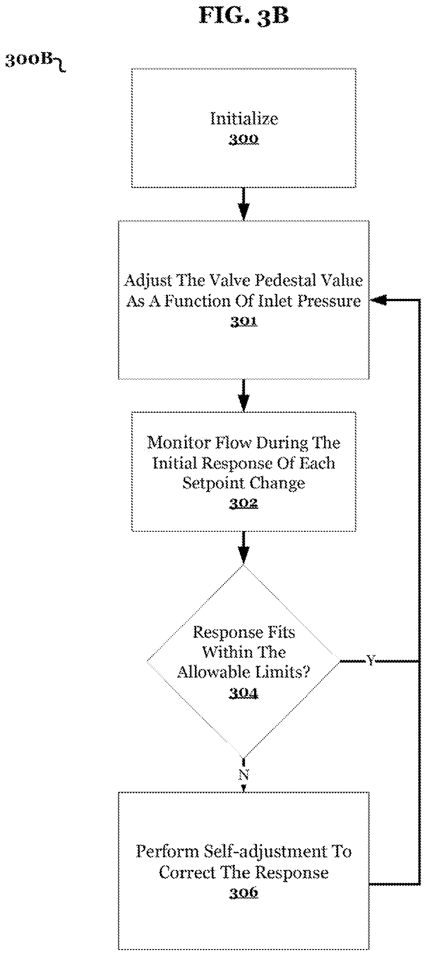

Figure 3B depicts an alternative embodiment (process 300B) for automatically self-adjusting the tuning parameters. In contrast to Figure 3A, in this embodiment, the process reads inlet pressure and corrects the pedestal based on inlet pressure (step 301) after initializing the MFC at power up or after a change of gas to reload pertinent attributes from memory (step 300). The process then monitors the MFC response (step 302) and further adjusts tuning parameters (step 306) such as pedestal if the response is out of acceptable limits (step 304) as described above.

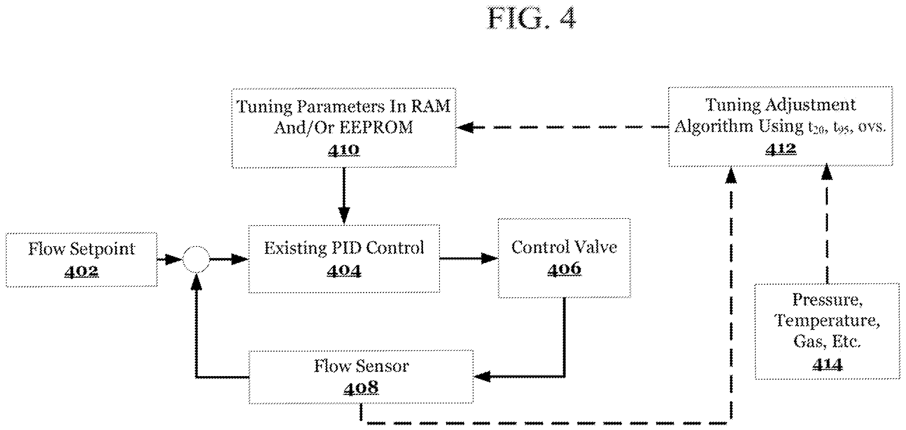

Figure 4 depicts a modified control algorithm that is executed in a MFC in accordance with a disclosed embodiment. The solid black lines represent the existing control algorithm of a MFC. For instance, in the existing control algorithm, a PID controller 404 receives a flow setpoint 402 and based on tuning parameter stored in memory (e.g., Random-Access Memory (RAM) or Electrically Erasable Programmable Read-Only Memory (EEPROM)), the PID controller 404 adjusts a control valve 406. The fluid flow is then measured using a flow sensor 408. The flow measurement is relayed to the PID controller 404, which re-adjusts the control valve if necessary for controlling fluid flow.

In accordance with the disclosed embodiments, the dash tines in Figure 4 indicate the modification to the existing control algorithm. Based on the flow measurement, the modified control algorithm executes at block 412 the tuning adjustment algorithm as described above, in which the pressure, temperature, gas type, or other parameters 414, are used to update the tuning parameters 410 to automatically adjust the valve pedestal. In certain embodiments, limits can be set within the new algorithm for the amount of change allowable over a certain time period, the total amount of change allowed, how to report the amount of change made, how to report various errors, etc.

Accordingly, the disclosed inventions provide various embodiments for providing a mass flow controller configured to automatically self-adjust the tuning parameters. While specific details about the above embodiments have been described, the above descriptions are intended merely as example embodiments and are not intended to limit the structure or implementation of the disclosed embodiments.

Those skilled in the art will recognize that the present teachings are amenable to a variety of modifications and/or enhancements. While the foregoing has described what is considered to be the best mode and/or other examples, it is understood that various modifications may be made therein and that the subject matter disclosed herein may be implemented in various forms and examples, and that the teachings may be applied in numerous applications, only some of which have been described herein.

The terminology used herein is for describing particular embodiments only and is not intended to be limiting of the invention. As used herein, the singular forms "a", "an" and "the" are intended to include the plural forms as well, unless the context clearly indicates otherwise. It will be further understood that the terms "comprise" and/or "comprising," when used in this specification and/or the claims, specify the presence of stated features, integers, steps, operations, elements, and/or components, but do not preclude the presence or addition of one or more other features, integers, steps, operations, elements, components, and/or groups thereof. The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope of the invention. The embodiment was chosen and described to explain the principles of the invention and the practical application, and to enable others of ordinary skill in the art to understand the invention for various embodiments with various modifications as are suited to the particular use contemplated. The scope of the claims is intended to broadly cover the disclosed embodiments and any such modification.

## Claims

1. A method for tuning a mass flow controller (100) comprising a mass flow sensor (146) and a valve (170) for regulating a flow of fluid out of an outlet (130) of the mass flow controller (100), the method comprising the mass flow controller (100) executing instructions, using a processor, to perform operations comprising:

   - monitoring flow during an initial response of a setpoint change from zero to non zero and
   - determining whether the valve response fits within an allowable limit; and
   - automatically performing a self-adjustment to correct for the valve response in response to a determination that the valve response does not fit within the allowable limit,

   wherein the self-adjustment to correct for the valve response comprises iteratively adjusting pedestal parameters by a certain amount until a suitable response is obtained to correct for changes that occur over time, and wherein determining whether the valve response fits within the allowable limit comprises:

   - determining a first measured time value to reach a first percentage of a final setpoint;
   - determining a second measured time value to reach a second percentage of the final setpoint, and
   - determining a third measured time value of an overshoot that occurs a first time the flow passes the final setpoint.

2. The method of Claim 1,
   wherein the self-adjustment to correct for the valve response further comprises adjusting proportional, integral, and derivative (PID) parameters of a control loop.

3. The method of Claim 2,

   wherein the self-adjustment to correct for the valve response comprises adjusting the pedestal as a function of inlet pressure and
   wherein adjusting the valve pedestal value as a function of inlet pressure is determined as follows:

$$Pedestal = Pr_{actual} * (Ped_{high} - Ped_{low})/(Pr_{high} - Pr_{low}) + Pr0,$$

   where $Pr_{actual}$ is a measured pressure, $Ped_{high}$, $Ped_{low}$ are respective pedestal values obtained at high and low pressure during a factory tuning process, and Pr0 is a constant determined at an end of the factory tuning process.

4. The method of one of Claims 1 to 3, wherein adjusting pedestal parameters is performed as follows:

$$Ped_{corrected} = Pedestal * (1 + P_{correctionfactor}),$$

   wherein Pedestal = $Pr_{actual} * (Ped_{high} - Ped_{low})/(Pr_{high} - Pr_{low}) + Pr0$, where $Pr_{actual}$ is a measured pressure, $Ped_{high}$, $Ped_{low}$ are respective pedestal values obtained at high and low pressure during a factory tuning process, and Pr0 is a constant determined at an end of the factory tuning process, and
   wherein $P_{correctionfactor}$ is adjusted iteratively after the setpoint change, where if the valve response is too fast, the $P_{correctionfactor}$ is decremented by a small amount, and if the response is too slow, the $P_{correctionfactor}$ is incremented by a small amount.

5. The method of Claim 4,
wherein the pedestal parameters are saved in memory.

6. The method of Claim 5,
wherein the mass flow controller (100) is further configured to execute instructions, using the processor, to continue performing a correction after a power cycle based on the pedestal parameters saved in memory.

7. A mass flow controller (100) comprising:

- an inlet (120) for receiving fluid;
- a flow path in which the fluid passes through the mass flow controller (100);
- a mass flow sensor (146) for providing a signal corresponding to mass flow of the fluid through the flow path;
- a valve (170) for regulating a flow of the fluid out of an outlet (130) of the mass flow controller (100); and
- at least one processing component (160) configured to execute instructions to perform operations comprising:

- monitoring flow during an initial response of a setpoint change from zero to non zero and determining whether the valve response fits within an allowable limit; and
- automatically performing a self-adjustment to correct for the valve response in response to a determination that the valve response does not fit within the allowable limit,

wherein the self-adjustment to correct for the valve response comprises iteratively adjusting pedestal parameters by a certain amount until a suitable response is obtained to correct for changes that occur over time, and wherein determining whether the valve response fits within the allowable limit comprises:

determining a first measured time value to reach a first percentage of a final setpoint;
determining a second measured time value to reach a second percentage of the final setpoint, and
determining a third measured time value of an overshoot that occurs a first time the flow passes the final setpoint.

8. The mass flow controller of Claim 7,
wherein the self-adjustment to correct for the valve response comprises adjusting proportional, integral, and derivative (PID) parameters of a control loop.

9. The mass flow controller of Claim 8,

wherein the self-adjusting to correct for the valve response comprises adjusting the pedestal as a function of inlet pressure and
wherein adjusting the valve pedestal value as a function of inlet pressure is determined as follows:

$$\text{Pedestal} = Pr_{actual} * (Ped_{high} - Ped_{low})/(Pr_{high} - Pr_{low}) + Pr0,$$

where $Pr_{actual}$ is a measured pressure, $Ped_{high}$, $Ped_{low}$ are respective pedestal values obtained at high and low pressure during a factory tuning process, and Pr0 is a constant determined at an end of the factory tuning process.

10. The mass flow controller of one of claims 7 to 9,
wherein adjusting pedestal parameters is performed as follows:

$$Ped_{corrected} = \text{Pedestal} * (1 + P_{correctionfactor}),$$

wherein Pedestal = $Pr_{actual} * (Ped_{high} - Ped_{low})/(Pr_{high} - Pr_{low}) + Pr0$, where $Pr_{actual}$ is a measured pressure, $Ped_{high}$, $Ped_{low}$ are respective pedestal values obtained at high and low pressure during a factory tuning process, and Pr0 is a constant determined at an end of the factory tuning process, and
wherein $P_{correctionfactor}$ is adjusted iteratively after the setpoint change, where if the valve response is too fast, the $P_{correctionfactor}$ is decremented by a small amount, and if the response is too slow, the $P_{correctionfactor}$ is incremented by a small amount.

**11.** The mass flow controller of Claim 10,
wherein the pedestal parameters are saved in memory.

**Patentansprüche**

**1.** Verfahren zum Abstimmen eines Massendurchflussreglers (100), der einen Massendurchflusssensor (146) und ein Ventil (170) zum Regulieren eines Fluidflusses aus einem Auslass (130) des Massendurchflussreglers (100) aufweist, wobei das Verfahren aufweist, dass der Massendurchflussregler (100) Anweisungen unter Verwendung eines Prozessors ausführt, um Operationen durchzuführen, die aufweisen:

- Überwachen des Flusses während einer anfänglichen Reaktion auf eine Sollwertänderung von Null auf Nicht-Null, und
- Bestimmen, ob sich die Ventilreaktion innerhalb einer zulässigen Grenze bewegt; und
- automatisches Durchführen einer Selbstanpassung zum Korrigieren der Ventilreaktion in Reaktion auf eine Bestimmung, dass sich die Ventilreaktion nicht innerhalb der zulässigen Grenze bewegt,

wobei die Selbstanpassung zum Korrigieren der Ventilreaktion ein iteratives Anpassen von Sockelparametern um einen bestimmten Betrag aufweist, bis eine geeignete Reaktion zum Korrigieren von über die Zeit auftretenden Veränderungen erhalten wird, und
wobei das Bestimmen, ob sich die Ventilreaktion innerhalb der zulässigen Grenze bewegt, aufweist:

- Bestimmen eines ersten gemessenen Zeitwerts zum Erreichen eines ersten Prozentsatzes eines endgültigen Sollwerts;
- Bestimmen eines zweiten gemessenen Zeitwerts zum Erreichen eines zweiten Prozentsatzes des endgültigen Sollwerts; und
- Bestimmen eines dritten gemessenen Zeitwerts eines Überschwingens, das erstmalig auftritt, wenn der Fluss den endgültigen Sollwert überschreitet.

**2.** Verfahren nach Anspruch 1,
wobei die Selbstanpassung zum Korrigieren der Ventilreaktion ferner ein Anpassen von Proportional-, Integral- und Differential(PID)-Parametern eines Regelkreises aufweist.

**3.** Verfahren nach Anspruch 2,

wobei die Selbstanpassung zum Korrigieren der Ventilreaktion ein Anpassen des Sockels in Abhängigkeit von einem Einlassdruck aufweist, und
wobei das Anpassen des Ventilsockelwerts in Abhängigkeit von einem Einlassdruck wie folgt bestimmt wird:

$$\text{Sockel} = Pr_{ist} * (Ped_{hoch} - Ped_{niedrig})/(Pr_{hoch} - Pr_{niedrig}) + Pr0,$$

wobei $Pr_{ist}$ ein gemessener Druck ist, $Ped_{hoch}$, $Ped_{niedrig}$ jeweilige Sockelwerte sind, die bei hohem und niedrigem Druck während eines Werksabstimmvorgangs erhalten werden, und $Pr0$ eine Konstante ist, die am Ende des Werksabstimmvorgangs bestimmt wird.

**4.** Verfahren nach einem der Ansprüche 1 bis 3, wobei das Anpassen der Sockelparameter wie folgt durchgeführt wird:

$$Ped_{korrigiert} = \text{Sockel} * (1 + P_{Korrekturfaktor}),$$

wobei $\text{Sockel} = Pr_{ist} * (Ped_{hoch} - Ped_{niedrig}) / (Pr_{hoch} - Pr_{niedrig}) + Pr0$, wobei $Pr_{ist}$ ein gemessener Druck ist, $Ped_{hoch}$, $Ped_{niedrig}$ jeweilige Sockelwerte sind, die bei hohem und niedrigem Druck während eines Werksabstimmvorgangs erhalten werden, und $Pr0$ eine Konstante ist, die am Ende des Werksabstimmvorgangs bestimmt wird, und
wobei $P_{Korrekturfaktor}$ nach der Sollwertänderung iterativ angepasst wird, wobei, wenn die Ventilreaktion zu schnell ist, $P_{Korrekturfaktor}$ um einen kleinen Betrag dekrementiert wird, und wenn die Reaktion zu langsam ist, $P_{Korrekturfaktor}$ um einen kleinen Betrag inkrementiert wird.

**5.** Verfahren nach Anspruch 4,
wobei die Sockelparameter in einem Speicher gespeichert sind.

**6.** Verfahren nach Anspruch 5,
wobei der Massendurchflussregler (100) ferner konfiguriert ist, Anweisungen unter Verwendung des Prozessors auszuführen, um die Durchführung einer Korrektur nach einem Leistungszyklus basierend auf den im Speicher gespeicherten Sockelparametern fortzusetzen.

**7.** Massendurchflussregler (100), aufweisend:

- einen Einlass (120) zum Erhalten von Fluid;
- einen Durchflusspfad, in dem sich das Fluid durch den Massendurchflussregler (100) hindurch bewegt;
- einen Massendurchflusssensor (146) zum Bereitstellen eines Signals, das dem Massendurchfluss des Fluids durch den Durchflusspfad entspricht;
- ein Ventil (170) zum Regulieren eines Flusses des Fluids aus einem Auslass (130) des Massendurchflussreglers (100) heraus; und
- zumindest eine Verarbeitungskomponente (160), die konfiguriert ist, Anweisungen zum Durchführen von Operationen auszuführen, die aufweisen:
- Überwachen eines Durchflusses während einer anfänglichen Reaktion auf eine Sollwertänderung von Null auf Nicht-Null, und Bestimmen, ob sich die Ventilreaktion innerhalb einer zulässigen Grenze bewegt; und
- automatisches Durchführen einer Selbstanpassung zum Korrigieren der Ventilreaktion in Reaktion auf eine Bestimmung, dass sich die Ventilreaktion nicht innerhalb der zulässigen Grenze bewegt,

wobei die Selbstanpassung zum Korrigieren der Ventilreaktion ein iteratives Anpassen von Sockelparametern um einen bestimmten Betrag aufweist, bis eine geeignete Reaktion zum Korrigieren von über die Zeit auftretenden Veränderungen erhalten wird, und
wobei das Bestimmen, ob sich die Ventilreaktion innerhalb der zulässigen Grenze bewegt, aufweist:

Bestimmen eines ersten gemessenen Zeitwerts zum Erreichen eines ersten Prozentsatzes eines endgültigen Sollwerts;
Bestimmen eines zweiten gemessenen Zeitwerts zum Erreichen eines zweiten Prozentsatzes des endgültigen Sollwerts; und
Bestimmen eines dritten gemessenen Zeitwerts eines Überschwingens, das erstmalig auftritt, wenn der Fluss den endgültigen Sollwert überschreitet.

**8.** Massendurchflussregler nach Anspruch 7,
wobei die Selbstanpassung zum Korrigieren der Ventilreaktion ein Anpassen von Proportional-, Integral-, Differential(PID)-Parametern eines Regelkreises aufweist.

**9.** Massendurchflussregler nach Anspruch 8,

wobei die Selbstanpassung zum Korrigieren der Ventilreaktion ein Anpassen des Sockels in Abhängigkeit von einem Einlassdruck aufweist, und
wobei das Anpassen des Ventilsockelwerts in Abhängigkeit von einem Einlassdruck wie folgt bestimmt wird:

$$Sockel = Pr_{ist} * (Ped_{hoch} - Ped_{niedrig})/(Pr_{hoch} - Pr_{niedrig}) + Pr0,$$

wobei $Pr_{ist}$ ein gemessener Druck ist, $Ped_{hoch}$, $Ped_{niedrig}$ jeweilige Sockelwerte sind, die bei hohem und niedrigem Druck während eines Werksabstimmvorgangs erhalten werden, und Pr0 eine Konstante ist, die am Ende des Werksabstimmvorgangs bestimmt wird.

**10.** Massendurchflussregler nach einem der Ansprüche 7 bis 9, wobei das Anpassen der Sockelparameter wie folgt durchgeführt wird:

$$Ped_{korrigiert} = Sockel * (1 + P_{Korrekturfaktor}),$$

wobei Sockel = Pr$_{ist}$ $^*$ (Ped$_{hoch}$ - Ped$_{niedrig}$) / (Pr$_{hoch}$ - Pr$_{niedrig}$) + Pr0, wobei Pr$_{ist}$ ein gemessener Druck ist, Ped$_{hoch}$, Ped$_{niedrig}$ jeweilige Sockelwerte sind, die bei hohem und niedrigem Druck während eines Werksabstimmvorgangs erhalten werden, und Pr0 eine Konstante ist, die am Ende des Werksabstimmvorgangs bestimmt wird, und wobei P-$_{Korrekturfaktor}$ nach der Sollwertänderung iterativ angepasst wird, wobei, wenn die Ventilreaktion zu schnell ist, P-$_{Korrekturfaktor}$ um einen kleinen Betrag dekrementiert wird, und wenn die Reaktion zu langsam ist, P-$_{Korrekturfaktor}$ um einen kleinen Betrag inkrementiert wird.

**11.** Massendurchflussregler nach Anspruch 10, wobei die Sockelparameter in einem Speicher gespeichert sind.

## Revendications

**1.** Procédé pour le réglage d'un régulateur de débit massique (100) comprenant un capteur de débit massique (146) et une vanne (170) pour la régulation d'un débit de fluide sortant d'une sortie (130) du régulateur de débit massique (100), le procédé comprenant le régulateur de débit massique (100) exécutant des instructions, à l'aide d'un processeur, pour réaliser des opérations comprenant :

- la surveillance du débit durant une réponse initiale d'un changement de point de consigne de zéro à non zéro et
- la détermination de si la réponse de la vanne se situe dans une limite autorisée ; et
- la réalisation automatique d'un auto-ajustement pour corriger la réponse de vanne en réponse à une détermination que la réponse de vanne ne se situe pas dans la limite autorisée,

dans lequel l'auto-ajustement pour corriger la réponse de la vanne comprend l'ajustement de manière itérative des paramètres du socle d'une certaine quantité jusqu'à ce qu'une réponse appropriée soit obtenue pour corriger les changements qui se produisent dans le temps, et
dans lequel la détermination de si la réponse de la vanne s'inscrit dans la limite autorisée comprend :

- la détermination d'une première valeur de temps mesurée pour atteindre un premier pourcentage d'un point de consigne final ;
- la détermination d'une deuxième valeur de temps mesurée pour atteindre un deuxième pourcentage du point de consigne final, et
- la détermination d'une troisième valeur de temps mesurée d'un dépassement qui se produit une première fois que le débit dépasse le point de consigne final.

**2.** Procédé selon la revendication 1,
dans lequel l'auto-ajustement pour corriger la réponse de la vanne comprend en outre l'ajustement des paramètres proportionnels, intégraux et dérivés (PID) d'une boucle de commande.

**3.** Procédé selon la revendication 2,

dans lequel l'auto-ajustement pour corriger la réponse de la vanne comprend l'ajustement du socle en tant que fonction de la pression d'entrée et
dans lequel l'ajustement de la valeur du socle de vanne en tant que fonction de la pression d'entrée est déterminé comme suit :

$$Socle = Pr_{actuelle} * (SOC_{haut} - SOC_{bas}) / (Pr_{haut} - Pr_{bas}) + Pr0$$

où Practuelle est une pression mesurée, SOC$_{haut}$, SOCbas sont des valeurs de socle respectives obtenues à haute et basse pressions durant un processus de réglage en usine, et Pr0 est une constante déterminée à la fin du processus de réglage en usine.

**4.** Procédé selon l'une des revendications 1 à 3, dans lequel l'ajustement des paramètres du socle est réalisé comme suit :

$$SOC_{corrigé} = = Socle * (1 + P_{facteur de correction}),$$

dans lequel Socle = $Pr_{actuelle}$ * ($Soc_{haut}$ - $Soc_{bas}$) / ($Pr_{haut}$ - $Pr_{bas}$) + $Pr0$, où $Pr_{actuelle}$ est une pression mesurée, $Soc_{haut}$, $Soc_{bas}$ sont des valeurs de socle respectives obtenues à haute et basse pressions durant un processus de réglage en usine, et $Pr0$ est une constante déterminée à la fin du processus de réglage en usine, et

dans lequel $P_{facteur}$ de correction est ajusté de manière itérative après le changement de point de consigne, où si la réponse de vanne est trop rapide, le $P_{facteur}$ de correction est décrémenté d'une petite quantité, et si la réponse est trop lente, le $P_{facteur}$ de correction est incrémenté d'une petite quantité.

**5.** Procédé selon la revendication 4,
dans lequel les paramètres de socle sont sauvegardés en mémoire.

**6.** Procédé selon la revendication 5,
dans lequel le régulateur de débit massique (100) est en outre configuré pour exécuter des instructions, à l'aide du processeur, pour continuer la réalisation d'une correction après un cycle de puissance sur base des paramètres de socle sauvegardés en mémoire.

**7.** Régulateur de débit massique (100) comprenant :

- une entrée (120) pour la réception de fluide ;
- un trajet de débit dans lequel le fluide passe à travers le régulateur de débit massique (100) ;
- un capteur de débit massique (146) pour la fourniture d'un signal correspondant au débit massique du fluide à travers le trajet de débit ;
- une vanne (170) pour la régulation d'un débit du fluide hors d'une sortie (130) du régulateur de débit massique (100) ; et
- au moins un élément de traitement (160) configuré pour exécuter des instructions pour réaliser des opérations comprenant :

- la surveillance du débit durant une réponse initiale d'un changement de point de consigne de zéro à non zéro et la détermination de si la réponse de vanne se situe dans une limite autorisée ; et
- la réalisation automatique d'un auto-ajustement pour corriger la réponse de vanne en réponse à une détermination que la réponse de vanne ne se situe pas dans la limite autorisée,

dans lequel l'auto-ajustement pour corriger la réponse de la vanne comprend l'ajustement de manière itérative des paramètres du socle d'une certaine quantité jusqu'à ce qu'une réponse appropriée soit obtenue pour corriger les changements qui se produisent dans le temps, et
dans lequel la détermination de si la réponse de la vanne s'inscrit dans la limite autorisée comprend :

la détermination d'une première valeur de temps mesurée pour atteindre un premier pourcentage d'un point de consigne final ;
la détermination d'une deuxième valeur de temps mesurée pour atteindre un deuxième pourcentage du point de consigne final, et
la détermination d'une troisième valeur de temps mesurée d'un dépassement qui se produit une première fois que le débit dépasse le point de consigne final.

**8.** Régulateur de débit massique selon la revendication 7, dans lequel l'auto-ajustement pour corriger la réponse de vanne comprend l'ajustement de paramètres proportionnels, intégraux et dérivés (PID) d'une boucle de commande.

**9.** Régulateur de débit massique selon la revendication 8, dans lequel l'auto-ajustement pour corriger la réponse de la vanne comprend l'ajustement du socle en tant que fonction de pression d'entrée et
dans lequel l'ajustement de la valeur du socle de vanne en tant que fonction de la pression d'entrée est déterminé comme suit :

$$\mathrm{Socle} = \mathrm{Pr}_{actuelle} * (\mathrm{SOC}_{haut} - \mathrm{SOC}_{bas})/(\mathrm{Pr}_{haut} - \mathrm{Pr}_{bas}) + \mathrm{Pr0}$$

où $Pr_{actuelle}$ est une pression mesurée, $Soc_{haut}$, $SOC_{bas}$ sont des valeurs de socle respectives obtenues à haute et basse pressions durant un processus de réglage en usine, et $Pr0$ est une constante déterminée à la fin du processus de réglage en usine.

10. Régulateur de débit massique selon l'une quelconque des revendications 7 à 9, dans lequel le réglage des paramètres du socle est réalisé comme suit :

$$\mathrm{Soc_{corrigé}} = \mathrm{Socle} * (1 + \mathrm{P_{facteur\ de\ correction}}),$$

dans lequel Socle = $\mathrm{Pr_{actuelle}}^{*}$ ($\mathrm{Soc_{haut}}$ -$\mathrm{Soc_{bas}}$) / ( Prhaut - $\mathrm{Pr_{bas}}$) + Pr0, où Practuelle est une pression mesurée, $\mathrm{Soc_{haut}}$, Socbas sont des valeurs de socle respectives obtenues à haute et basse pressions durant un processus de réglage en usine, et Pr0 est une constante déterminée à la fin du processus de réglage en usine, et dans lequel $\mathrm{P_{facteur}}$ de correction est ajusté de manière itérative après le changement de point de consigne, où si la réponse de vanne est trop rapide, le $\mathrm{P_{facteur}}$ de correction est décrémenté d'une petite quantité, et si la réponse est trop lente, le $\mathrm{P_{facteur}}$ de correction est incrémenté d'une petite quantité.

11. Régulateur de débit massique selon la revendication 10, dans lequel les paramètres de socle sont sauvegardés en mémoire.

FIG. 1

FIG. 2

INITIAL TUNING AND STRESS CYCLE

Legend:
- SPEC
- 25% SP
- 50% SP
- 75% SP
- 100% SP

SOLID LINES - INITIAL TUNING

DASHED LINES - AFTER STRESS CYCLING

Y-axis: INDICATED FLOOR (%SP)

X-axis: TIME FROM SET POINT(S)

## FIG. 3A

300A

```
┌─────────────────────────┐
│                         │
│       Initialize        │
│         300             │
│                         │
└─────────────────────────┘
             │
             ▼
┌─────────────────────────┐
│  Monitor Flow During The│
│  Initial Response Of Each│ ◄────┐
│    Setpoint Change      │      │
│         302             │      │
└─────────────────────────┘      │
             │                   │
             ▼                   │
          ╱─────╲                │
         ╱Response╲              │
        ╱ Fits     ╲             │
       ╱ Within The ╲──── Y ─────┘
       ╲Allowable    ╱
        ╲Limits?    ╱
         ╲  304    ╱
          ╲───────╱
             │
             N
             │
             ▼
┌─────────────────────────┐
│ Perform Self-adjustment To│
│  Correct The Response   │
│         306             │
│                         │
└─────────────────────────┘
```

# FIG. 3B

300B

```
┌─────────────────────────┐
│        Initialize        │
│          300             │
└─────────────────────────┘
            │
            ▼
┌─────────────────────────┐
│  Adjust The Valve Pedestal Value │
│  As A Function Of Inlet Pressure │
│          301             │
└─────────────────────────┘
            │
            ▼
┌─────────────────────────┐
│   Monitor Flow During The │
│   Initial Response Of Each │
│     Setpoint Change      │
│          302             │
└─────────────────────────┘
            │
            ▼
         ╱────────╲
        ╱ Response ╲
       ╱  Fits      ╲
       ╲ Within The ╱ ──── Y
        ╲ Allowable ╱
         ╲ Limits? ╱
          ╲  304  ╱
             │ N
             ▼
┌─────────────────────────┐
│  Perform Self-adjustment To │
│   Correct The Response   │
│          306             │
└─────────────────────────┘
```

# FIG. 4

Tuning Parameters In RAM And/Or EEPROM **410**

Tuning Adjustment Algorithm Using $t_{20}$, $t_{95}$, ovs. **412**

Flow Setpoint **402**

Existing PID Control **404**

Control Valve **406**

Flow Sensor **408**

Pressure, Temperature, Gas, Etc. **414**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004010234 A2

- US 6845659 B